**Europäisches Patentamt**

**European Patent Office**

**Office européen des brevets**

(11) Publication number: **0 463 000 B1**

# EUROPEAN PATENT SPECIFICATION

(45) Date of publication of patent specification: **26.10.94** (51) Int. Cl.5: **B23B 27/14**

(21) Application number: **90904146.9**

(22) Date of filing: **16.02.90**

(86) International application number:
**PCT/US90/00924**

(87) International publication number:
**WO 90/11156 (04.10.90 90/23)**

(54) **MULTILAYER COATED CEMENTED CARBIDE CUTTING INSERT.**

(30) Priority: **17.03.89 US 324847**

(43) Date of publication of application:
**02.01.92 Bulletin 92/01**

(45) Publication of the grant of the patent:
**26.10.94 Bulletin 94/43**

(84) Designated Contracting States:
**DE ES FR GB IT**

(56) References cited:
**EP-A- 162 656**
**GB-A- 2 048 960**
**US-A- 4 776 863**

**DREYER ET AL; "Development and Tool Life Behavior of Super-Wear-Resistant Multilayer Coatings On Hard Metals." Metals Society (Book 278), London, England (1982) pp. 112-117**

**Schintlmeister et al, "Cutting Tool Materials Coated By Vapour Deposition," Wear 100 (1984) pp. 153-169.**

(73) Proprietor: **KENNAMETAL INC.**
**P.O. Box 231**
**Latrobe, PA 15650 (US)**

(72) Inventor: **BRYANT, William, A.**
**927 Old Hills Road**
**McKeesport, PA 15135 (US)**
Inventor: **GRAB, George, P.**
**553 Hampton Street**
**Greensburg, PA 15601 (US)**

(74) Representative: **Bunke, Holger, Dr.rer.nat.**
**Dipl.-Chem. et al**
**Prinz & Partner**
**Manzingerweg 7**
**D-81241 München (DE)**

Rank Xerox (UK) Business Services
(3.10/3.09/3.3.3)

## Description

The present invention relates to coated cemented carbide metalcutting inserts, especially those of the indexable type.

The primary benefit of various coating materials to the metalcutting performance of coated indexable cobalt cemented tungsten carbide inserts has been well documented. Abrasion resistance (the most important consideration at lower cutting speeds) is provided by titanium carbide (or titanium carbonitride). Resistance to tool-workpiece chemical interaction (crater formation) is provided most commonly by alumina due to this material having a very low free energy of formation. Titanium nitride is reputed to lower tool-workpiece frictional forces and the occurrence of edge build-up. In addition, its lustrous gold color enhances the marketability of the coated tool and allows tool wear to be more readily observed.

The combined benefits of these materials have been used to advantage in first generation multilayer coated tool inserts. Examples include the coating systems titanium carbide/titanium carbonitride/titanium nitride and titanium carbide/alumina/titanium nitride. Additional benefits are expected for second generation multilayer coatings designed to achieve improved performance through optimization of layer thickness, number of layers and the sequence of layer deposition.

The advantages of reduced grain size in chemical vapor deposition (CVD) coatings applied to indexable cobalt cemented tungsten carbide inserts are well known. The most commonly utilized method of reducing grain size in alumina layers is to periodically interrupt the deposition of the alumina layer by depositing a thin layer of titanium carbide, titanium carbonitride or titanium nitride between the alumina layers. In this way, each succeeding alumina layer renucleates and grain growth is minimized. The advantages of this procedure were demonstrated by Dreyer and Kolaska ("Development and Tool Life Behavior of Super-Wear-Resistant Multilayer Coatings on Hardmetals," Metals Society (Book 278), London, England (1982), pages 112-117).

Considerable improvements in flank wear resistance have been observed when cutting hot-worked steel (54 HRC), chilled cast iron and Inconel 718 with commercially available multilayered alumina coated indexable inserts. These inserts utilized a ten layer coating consisting of titanium carbide, titanium carbonitride, titanium nitride and four layers of alumina separated by three layers of titanium nitride (Schintelmeister et al, "Cutting Tool Materials Coated by Chemical Vapor Deposition," Wear, 100 (1984), pages 153-169).

Improvements in both flank and crater wear performance have been demonstrated for a multilayer alumina coated insert with an initial 3 micrometer $\mu$m thick layer of titanium carbide overlaid by 19 layers of titanium nitride and 19 layers of alumina to a total thickness of 6 $\mu$m. When machine tested against conventional 6 $\mu$m thick titanium carbide coated and 5 $\mu$m/1 $\mu$m thick titanium carbide/alumina coated inserts, the alumina multilayered insert demonstrated superior crater and flank wear resistance in the machining of C60 steel. Superior performance of this alumina multilayered coating was also observed during interrupted cutting of CK 45 KN steel (Dreyer et al, United Kingdom Patent Application No. GB 2048960A).

EP-A-0 162 656 discloses a multilayer coated cemented carbide making use of the high wear resistance of $Al_2O_3$ without lowering the toughness thereof. The cutting insert described therein comprises a cemented carbide substrate, a backing layer consisting of carbides, nitrides, carbo nitrides, carboxy nitrides, oxy nitrides, boro nitrides or boro carbo nitrides of Ti, an active layer having a total thickness of 5 - 20 $\mu$m consisting of alumina sublayers in which titanium oxide is dissolved or at most 30 v/o of titanium oxide is coexistent, each of said oxide sublayers having a thickness of 0.01 to 2 $\mu$m and being divided by interlayers each having a thickness of 0.01 to 2 $\mu$m and consisting of TiC, TiN, TiCN, TiCNO, TiCO, TiNO, Ti-oxides, Ti(B, N), Ti(B, N, C), SiC, AlN or AlON. In the examples a cemented carbide substrate is described being composed of 85 w/o of WC, 10 w/o of (Ti, Ta, W)C and 5 w/o of Co. The titanium oxide addition is said to increase the toughness of the cutting insert.

Applicants have now surprisingly discovered a multilayered coated cemented carbide cutting insert possessing an excellent combination of edge strength, deformation resistance, crater resistance and flank wear resistance, which make it commercially competitive in a wide range of metalcutting applications such as continuous and interrupted machining of carbon and alloy steels and gray and ductile cast irons.

A cutting insert is provided having a body with a rake face and a flank face, at whose junction is a cutting edge. Preferably, the cutting insert is of the indexable type, having more than one cutting edge. This body is composed of a cemented carbide substrate having a coating bonded thereto. In accordance with the present invention, the cemented carbide substrate consists essentially of: (1) tungsten carbide grains; (2) solid solution carbide grains containing tungsten and an element selected from the group consisting of titanium, hafnium, zirconium, tantalum and niobium; and (3) 6.1 to 6.5 weight percent (w/o) cobalt.

The substrate is characterized by a hardness of 90.8 to 91.6 Rockwell A and a magnetic coercive force of 9,550 to 12,740 A/m (120 to 160 oerstads).

Preferably, tungsten carbide forms at least 80 w/o of the substrate, and more preferably, at least 85 w/o of said substrate. Cobalt preferably is present at about 6.2 to 6.4 w/o of said substrate. Preferably, titanium, niobium and tantalum are present at 1.7 to 2.3, 1.2 to 1.8 and 3.2 to 3.8 w/o of the substrate, respectively. Preferably, the hardness of the substrate is 91.0 to 91.6 Rockwell A.

The coating in accordance with the present invention consists of three layers, a backing layer bonded to the substrate, an active layer bonded to the backing layer and a finish layer bonded to the active layer. The backing layer has a thickness of at least 5.0 micrometers $\mu$m and contains one or more layers selected from the group of carbonitrides of titanium, hafnium and zirconium, alone or in combination with each other. Preferably, the backing layer is titanium carbonitride of either uniform or varying stoichiometry.

The active layer contains alternating sublayers of alumina and a nitride layer selected from the group of nitrides of titanium, zirconium and hafnium, alone or in combination. There are at least two layers of alumina separated by the nitride layer. The active layer may start with either an alumina or nitride layer bonded directly to the backing layer. Preferably, each alumina layer has a nominal thickness of less than about 1.5 $\mu$m and, more preferably, 0.5 to 1.0 $\mu$m, to assure that the average alumina grain size is between about 0.15 to 0.5 $\mu$m and, therefore, of high hardness and excellent crater resistance. Each alumina sublayer is separated from and bonded to the next alumina sublayer by a nitride sublayer, preferably titanium nitride, having a preferred thickness of about 1.0 $\mu$m or less and, more preferably, of about 0.2 to less than 1.0 $\mu$m.

The finish layer is bonded to the outermost alumina sublayer in the active layer and has one or more sublayers selected from the group of the carbonitrides and nitrides of titanium, alone or in combination. Preferably, the finish layer is formed of titanium nitride having a total thickness of 0.2 to 4 $\mu$m.

In an alternative preferred embodiment, the finish layer is composed of two sublayers, an inner sublayer of titanium carbonitride bonded to the last alumina sublayer, and then an outermost layer of titanium nitride. In this last embodiment, the titanium carbonitride sublayer has a preferred thickness of about 0.2 to 1.0 $\mu$m and the titanium nitride sublayer has a preferred thickness of about 0.3 to 3.0 $\mu$m, and more preferably, 0.3 to 2.0 $\mu$m.

These and other aspects of the present invention will become more apparent upon review of the following detailed description of the invention in conjunction with the drawings which are briefly described below:

Figure 1 shows an isometric view of an embodiment of a cutting insert in accordance with the present invention.

Figure 2 shows a typical microstructure of a substrate in accordance with the present invention (at 1500x magnification).

Figure 3 shows a cross section through a preferred embodiment of the coating in accordance with the present invention.

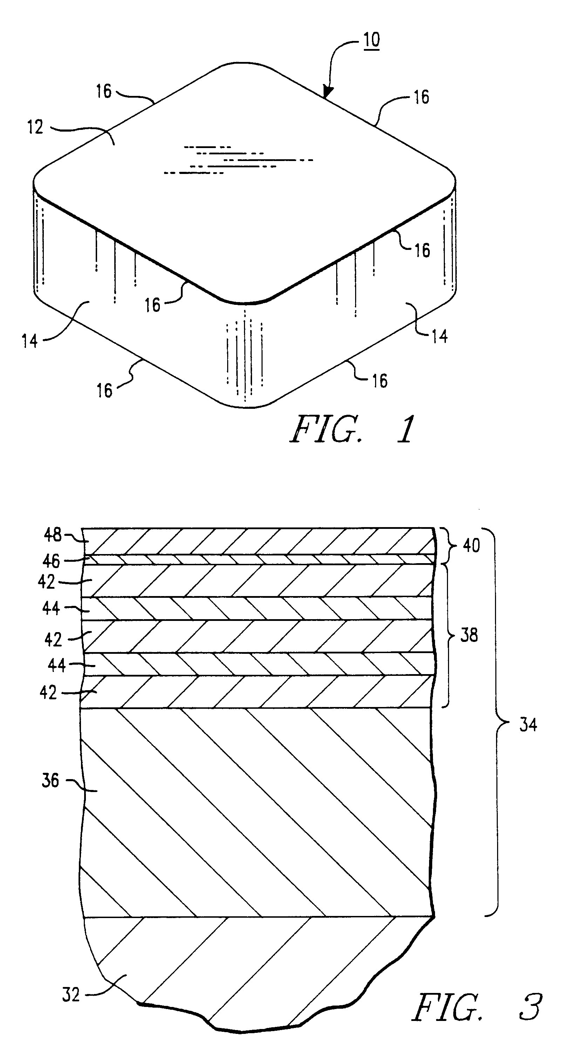

In accordance with the present invention, a multilayered cemented carbide metalcutting insert 10 is provided as shown in Figure 1. The cutting insert 10 is preferably of the indexable and invertable type having a body in which a rake face 12 and a flank face 14 join to form a cutting edge 16.

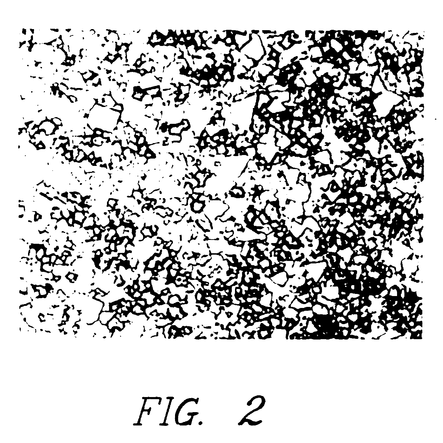

As shown in Figures 2 and 3, the body is composed of a cemented carbide substrate 32 having a coating 34 bonded thereto. As shown in the photomicrograph (Figure 2) the cemented carbide substrate consists essentially of tungsten carbide grains (light gray phase), solid solution carbide grains (darker gray phase) containing tungsten and one or more elements selected from the group of titanium, hafnium, zirconium, tantalum and niobium, and 6.1 to 6.5 w/o cobalt (white phase). The substrate is characterized by a hardness of 90.8 to 91.6 Rockwell A and a magnetic coercive force of 9,550 to 12,740 A/m (120 to 160 oerstads).

Preferably, the cobalt content of the cemented carbide substrate is 6.2 to about 6.4 w/o. It is applicants' belief that, at this combination of cobalt content and tungsten carbide grain size (or binder phase thickness, as measured by magnetic coercive force) and hardness, preferably 91 to 91.6, the substrate possesses a unique combination of deformation resistance and toughness (or edge strength) which in combination with the coating according to the present invention significantly contribute to its unique metalcutting abilities.

Preferably, titanium, tantalum and niobium are also present as solid solution carbides. Titanium is added for grain size control and deformation resistance, while tantalum and/or niobium are added for thermal shock resistance. In a more preferred composition in accordance with the present invention, the substrate contains about 1.7 to 2.3 w/o titanium and 4.4 to 5.6 w/o total of tantalum and niobium, with 3.2 to 3.8 w/o tantalum and 1.2 to 1.8 niobium being most preferred.

Preferably, the substrate has a magnetic saturation of greater than 88 percent (more preferably, 88 to 98 percent) and, preferably, contains only A or, at worst, A and B type porosity.

The tungsten carbide content of the substrate is, preferably, at least 80 w/o and, more preferably, at least 85 w/o.

The coating in accordance with the present invention (see Figure 3) consists of three main layers or sections, a backing layer 36 bonded to the substrate 32, an active layer 38 bonded to the backing layer 36, and a finish layer 40 bonded to the active layer 38.

The backing layer 36 is formed of one or more layers or sublayers selected from the group of carbonitrides of titanium, hafnium, zirconium, alone or in combination with each other. Preferably, the backing layer is composed of carbonitrides of titanium only. It has been found to be most preferable that the backing layer be made of a single layer of titanium carbonitride, and that the backing layer has a thickness of about 5 to 8 $\mu$m, preferably 5.5 to 7.5 $\mu$m, and more preferably, about 5.5 to 7.0 $\mu$m. It has been found that resistance to flank wear is proportional to the thickness of the backing layer. The titanium carbonitride backing layer may be of a single chemistry or it may be graded, i.e., have a carbon to nitrogen ratio that varies through its thickness, e.g., carbon decreasing in a direction away from the substrate.

The active layer 38 contains alternating sublayers of alumina 42 and a nitride 44 selected from the group of nitrides of titanium, zirconium and hafnium, alone or in combination. The active layer may start with an alumina or nitride sublayer bonded directly to the backing layer. In order to obtain high hardness alumina sublayers having enhanced crater wear resistance, each alumina layer should have a fine grain size, preferably with a median grain size in the range of about 0.15 to 0.5 $\mu$m. This fine grain size is obtained by keeping the thickness of each alumina layer to less than about 1.5 $\mu$m and, more preferably, about 0.5 to about 1.0 $\mu$m. In order to maximize crater resistance, at least two, and preferably at least three or four, alumina sublayers 42 of the type described above are provided. Preferably, the total thickness of the alumina sublayers in the active layer is about 2.3 to 4.0 $\mu$m. Each alumina sublayer is separated from the next by a nitride sublayer, which is preferably titanium nitride. This nitride sublayer not only separates the alumina sublayers, allowing the cumulative thickness of fine grained, crater resistant alumina, to be increased, but it also serves to adherently bond one alumina sublayer to the next. Tests performed by applicants indicate that titanium nitride sublayers provide significantly better adherence to the alumina sublayers than either titanium carbide or titanium carbonitride. The thickness of each nitride sublayer 44 should be at least about 0.2 $\mu$m to assure complete coverage of the underlying alumina sublayer, but no more than about 1.0 $\mu$m, since there is no advantage to increased thickness. The active layer preferably has a total thickness of 3 to 8 $\mu$m and, more preferably, 3 to 5.5 $\mu$m.

Bonded to the last alumina sublayer 42 in the active layer 38 is a finish layer 40. The finish layer is designed to provide a low friction surface to the coating 34 and to minimize metal build-up on the coating during metalcutting operations.

The finish layer 40 contains one or more layers or sublayers selected from the group of the carbonitrides and nitrides of titanium, alone or in combination. Preferably, the finish layer is formed of titanium nitride having a thickness of 0.2 to 4 $\mu$m. In the alternative preferred embodiment shown in Figure 3, the finish layer 40 is composed of two sublayers, an inner sublayer 46 of titanium carbonitride bonded to the last alumina sublayer 42, and then an outermost sublayer 48 of titanium nitride bonded to the titanium carbonitride sublayer 46. In this last embodiment, the titanium carbonitride sublayer has a preferred thickness of about 0.2 to 1.0 $\mu$m and the titanium nitride sublayer has a preferred thickness of about 0.3 to 3.0 $\mu$m and, more preferably, 0.3 to 2.0 $\mu$m.

As coating thickness increases, residual stresses build up in the coatings, which can reduce the strength or integrity of the coatings and lead to reductions in metalcutting performance. Therefore, the coating 34 total thickness is in the range of 7.5 to 20 $\mu$m, with about 8 to 15 $\mu$m being preferred and about 9 to 12.5 $\mu$m being more preferred.

The coating described above may be applied by conventional chemical vapor deposition processes well known to those of ordinary skill in the art in the metalcutting insert field. The nitride coatings described above may also be applied by physical vapor deposition (PVD) techniques, also well known to those of ordinary skill in the art. For example, in the coatings described herein, it is contemplated that all coating layers may be applied by automated CVD techniques. Alternatively, for example, the titanium nitride layer in the finish layer may be applied by PVD techniques.

The present invention will become more clear upon review of the following examples which are meant to be only illustrative of the present invention.

The charge materials shown in Table 1 were milled in a 18.1 cm x 38.1 cm (7.125 inch x 15 inch) mill jar with 45,000 grams of cemented tungsten carbide cycloids and heptane for 19 hours to produce a Fisher SubSieve Size (FSSS) (ASTM 330-82) apparent particle size of 1.2 $\mu$m. The milled slurry was then poured through a 37 $\mu$m (400 mesh) sieve into a sigma dryer. Liquid paraffin and ethomeen levels of 2 percent and 0.25 percent, respectively, were then added and the slurry was then mixed and dried in the sigma blender.

The resulting mixture was then Fitzmilled through a 1.02 mm (0.040 inch) screen.

Inserts were then pill pressed and sintered to full density at 1454°C (2650°F)for 30 minutes under about a 25 $\mu$m vacuum. The sintered product was then ground and honed to a SNGN-433 (ANSI B 212.4-1986) style indexable insert substrate.

<div align="center">

### TABLE 1

| Material | FSSS Apparent Powder Size ($\mu$m) | | Weight % in Mix | | | | Charge Weight (Grams) |
|---|---|---|---|---|---|---|---|
| | | | Co | Ta | Ti | Nb | |
| WC | 4.05 | 4.82 | – | – | – | – | 7,762 |
| WTiC$_2$ | 1.00 | .92 | .03 | .22 | 2.00 | .04 | 922 |
| TaC | 1.65 | .22 | – | 3.28 | – | – | 350 |
| NbC | 1.45 | .19 | – | – | – | 1.46 | 165 |
| Co | 1.46 | – .03 | 6.27 | – | – | – | 631 |
| W | 1.34 | – | – | – | – | – | 170 |
| Total | | | 6.12 | 6.30 | 3.50 | 2.00 | 1.50  10,000 |

</div>

Examination of the sintered product (batch 1) showed that it had a magnetic saturation of 98 percent, a magnetic coercive force of 11,940 A/m (150 oerstads) and a Rockwell A hardness of 91.4 - 91.5. The tungsten carbide grain size ranged from 1 to 7 $\mu$m with a few larger tungsten carbide grains up to 17 $\mu$m. The solid solution carbide grain size ranged from 1 to 4 $\mu$m (see Figure 2). The porosity of the substrate was rated as AO2 - B00.1 - C00. No cobalt enrichment or solid solution carbide depletion was observed at or near the substrate surface.

Two additional batches (batches 2 and 3) of substrates were made having the same nominal composition as that described above and processed in a manner similar to that described above. These two batches were, however, pressure sintered by sintering for 30 minutes at 1454°C (2650°F) in vacuum followed by 30 minutes pressurization at temperature and then further sintering at 1454°C (2650°F) for 30 minutes at 2.07 MPa (300 psi) argon.

Batch 2 sintered product had a magnetic saturation of 96 percent of saturation, a magnetic coercive force of 10,350 A/m (130 oerstads) and a Rockwell A hardness of 91.2. The tungsten carbide grain size ranged from about 1 to 7 $\mu$m. The solid solution carbide grain size ranged from about 1 to 4 $\mu$m. The porosity of the substrate was AO2 - B00-2 - C00. Cobalt enrichment and solid solution carbide depletion were observed extending inwardly about 14 and 19.1 $\mu$m, respectively, in from the substrate surface.

Batch 3 sintered substrates had a magnetic saturation of 91 percent of saturation, a magnetic coercive force of 11,000 A/m (138 oerstads) and a Rockwell A hardness of 91.4. The microstructure was similar to the Batch 1 microstructure (i.e., no cobalt enrichment or solid solution carbide depletion observed at the substrate surface).

The substrates from batches 2 and 3 were cleaned and then coated in a production size CVD reactor to provide one of the two nominal coating structures outlined below:

|  | Coating 1 | Coating 2 |
|---|---|---|
| Backing Layer: | 5.5$\mu$m TiCN<br>0.5$\mu$m TiCN graded to TiN | 6.0$\mu$m TiCN |
| Active Layer: | 1.0$\mu$m Al$_2$O$_3$<br>0.5$\mu$m TiN<br>1.0$\mu$m Al$_2$O$_3$<br>0.5$\mu$m TiN<br>1.0$\mu$m Al$_2$O$_3$ | 1.0$\mu$m Al$_2$O$_3$<br>0.5$\mu$m TiN<br>1.0$\mu$m Al$_2$O$_3$<br>0.5$\mu$m TiN<br>1.0$\mu$m Al$_2$O$_3$ |
| Finish Layer: | 0.3$\mu$m TiCN<br>0.7$\mu$m TiN | 0.3$\mu$m TiCN<br>0.7$\mu$m TiN |
| Total Nominal Coating Thickness | 11.0$\mu$m | 11.0$\mu$m |

The coatings 1 and 2 were respectively applied by the methods 1 and 2 shown in Table 2.

## TABLE 2

### DEPOSITION CONDITIONS 1

**Backing Layer**

$H_2$ - 67, 79, 85, 67 SLPM     Time - 145, 15, 15, 15, min

$N_2$ - 20 SLPM     Temperature - 920/960°C

$CH_4$ - 24, 12, 6, 0 SLPM     Pressure - 16 kPa (120 torr)

$TiCl_4$ - 6.5 g/min

**Active Layer**

$Al_2O_3$:

$H_2$ - 51 SLPM     Time - 115 minutes

$HCl$ - 2.4 SLPM     Temperature - 920/940°C

$CO_2$ - 1.2 SLPM     Pressure - 5.3 kPa (40 torr)

$H_2S$ - 0.022 SLPM

TiN:

$H_2$ - 30 SLPM     Time - 15, 15 minutes

$N_2$ - 37 SLPM     Temperature - 920/940°C

$TiCL_4$ - 6.5 g/min     Pressure - 8, 16 kPa (60, 120 torr)

**Finish Layer**

TiCN:

$H_2$ - 85 SLPM     Time - 7 minutes

$N_2$ - 31 SLPM     Temperature - 970/1030°C

$CH_4$ - 20 SLPM     Pressure - 16 kPa (120 torr)

$TiCl_4$ - 7.6 g/min

TiN:

$H_2$ - 85 SLPM     Time - 15 minutes

$N_2$ - 31 SLPM     Temperature - 970/1030°C

$TiCl_4$ - 7.6 g/min     Pressure - 16 kPa (120 torr)

*SLPM = standard liters/minute

## TABLE 2

### DEPOSITION CONDITIONS 2

#### Backing Layer

$H_2$ – 67 SLPM     Time – 200 minutes

$N_2$ – 20 SLPM     Temperature – 920/960°C

$CH_4$ – 24 SLPM     Pressure – 16 kPa (120 torr)

$TiCl_4$ – 6.5 g/min

#### Active Layer

$Al_2O_3$:  $H_2$ – 44 SLPM     Time – 200 minutes

HCl – 2.4 SLPM     Temperature – 920/960°C

$CO_2$ – 4.4 SLPM     Pressure – 5.3 kPa (40 torr)

$H_2S$ – 0

TiN:  $H_2$ – 30 SLPM     Time – 30 minutes

$N_2$ – 37 SLPM     Temperature – 920/960°C

$TiCL_4$ – 6.5 g/min     Pressure – 8 kPa (60 torr)

#### Finish Layer

TiCN:  $H_2$ – 85 SLPM     Time – 7 minutes

$N_2$ – 31 SLPM     Temperature – 970/1030°C

$CH_4$ – 20 SLPM     Pressure – 16 kPa (120 torr)

$TiCl_4$ – 7.6 g/min

TiN:  $H_2$ – 85 SLPM     Time – 15 minutes

$N_2$ – 31 SLPM     Temperature – 970/1030°C

$TiCl_4$ – 7.6 g/min     Pressure – 16 kPa (120 torr)

The nominal coating thicknesses reported above were measured on the rake face, approximately 2.54 mm (0.1 inches) away from the cutting edge nose, to avoid edge effects. Actual coating thicknesses measured (SNMG-433) on the type 2 coating on batches 2 and 3 as shown below:

|  | Batch 2/Coating 2($\mu$m) | Batch 3/Coating 2($\mu$m) |
|---|---|---|
| TiCN | 6.5 | 6.8 |
| $Al_2O_3$ | 1.0 | 1.0 |
| TiN | 0.3 | 0.3 |
| $Al_2O_3$ | 0.8 | 0.8 |
| TiN | 0.4 | 0.3 |
| $Al_2O_3$ | 0.7 | 0.5 |
| TiCN | 0.3 | 0.3 |
| TiN | 0.6 | 0.9 |

Metalcutting tests using these inserts and inserts in other common geometry styles made in essentially the manner described above have provided excellent cutting performance in the turning of a variety of steels and good cutting performance in the turning of both gray and ductile cast irons. Inserts in accordance with the present invention have also exhibited excellent edge strength in interrupted cutting tests on steel and cast iron.

Inserts made essentially in accordance with the above procedures were made in the SNMG-433 geometry style (0.051 to 0.102 mm (.002 to .004 inch) radius hone) and subjected to the slotted bar edge strength tests described below in Table 3. The slotted bar utilized had four slots at 90° to each other running the length of the bar. The width of each slot was 0.48 cm (3/16 inch).

TABLE 3

| SLOTTED BAR EDGE STRENGTH TEST--AISI 41L50 STEEL | | | | |
|---|---|---|---|---|
| | Number of Impacts at 107 surface meters (350 Surface Ft.)/Min. | | | |
| | Batch 2 Coating 1 | Batch 3 Coating 1 | Batch 2 Coating 2 | Batch 3 Coating 2 |
| Average* Standard Deviation | 597 + 226 | 310 274 | 409 + 351 | 387 212 |
| | Number of Impacts at 198 surface meters (650 Surface Ft.)/Min. | | | |
| | Batch 2 Coating 1 | Batch 3 Coating 1 | Batch 2 Coating 2 | Batch 3 Coating 2 |
| Average* Standard Deviation | 502 152 | 421 159 | 636 77 | 577 147 |
| Test Conditions 15° lead angle/cutting diameter 11.43 to 8.89 cm (4.50 inch to 3.50 inch) (for 107 m/min (350 sfm)) and 14.68 to 11.63 cm (5.78 inch to 4.58 inch) (for 198 m/min (650 sfm))/ Feed rates: 0.37, 0.51, 0.61, 0.74, 0.91, 1.02, 1.17, 1.35 mm (0.0145, 0.020, .024, .029, .036, .040, .046, .053 inch)- 100 impacts at each feed until breakage/2.54 mm (0.100 inch) depth of cut / no coolant | | | | |

*Each average is an average of 7 to 8 cutting edge tests. The plus sign indicates that at least one edge underwent 800 impacts without failure, at which time the test was stopped.

In a manner similar to the above, additional cutting inserts were made having the batch 1 substrate but with the following nominal coating structures:

| | Coating Structure | | |
|---|---|---|---|
| | 3 | 4 | 5 |
| Backing Layer | 2.5μm TiC 2.5μm TiCN | 5.0μm TiCN | 2.5μm TiC 2.5μm TiCN |
| Active Layer | 1μm Al₂O₃ | 1μm Al₂O₃ | 1μm Al₂O₃ 0.5μm TiN |
| | 0.5μm TiN | 0.5μm TiN | 1.0μm Al₂O₃ 0.5μm TiN |
| | 1.0μm Al₂O₃ | 1.0μm Al₂O₃ | 1.0μm Al₂O₃ |
| | 0.5μm TiN | 0.5μm TiN | 0.5μm TiN 1.0μm Al₂O₃ |
| | 1.0μm Al₂O₃ | 1.0μm Al₂O₃ | |
| Finish Layer | 0.5-1.0μm TiN | 0.5-1.0μm TiN | 0.5-1.0μm TiN |

The batch 1 cutting inserts having the coating styles 3-5 were then subjected to the following tests (Tables 4-13):

TABLE 4

| Tool Material | Tool Life (min) & Failure Mode | | | Avg. |
|---|---|---|---|---|
| Coating 3 | 6.8 cr | 7.2 mw* | 5.5 cr | 6.5 |
| Coating 4 | 7.0 mw | 6.8 mw | 7.2 cr | 7.0 |
| Coating 5 | 7.0 mw | 5.0 ch* | 7.5 fw | 6.5 |

*NOTE: Flaking of the coating was noted.

Turning AISI 1045 steel (200 BHN)
213 m/min (700 sfm) / 0.58 mm/rev. (.023 ipr) / 2.03 mm (.080") doc
CNMG-432 style (0.025 to 0.051 mm (.001 - .002 inch) radius hone)
-5° lead angle / no coolant
Tool Life Criteria:

fw --      0.381 mm (.015") uniform flank wear
mw --      0.762 mm (.030") maximum localized flank wear
cr --      0.102 mm (.004") crater wear
ch --      0.762 mm (.030) chip
bk --      breakage

TABLE 5

| Tool Material | Tool Life (min) & Failure Mode | | | Avg. |
|---|---|---|---|---|
| Coating 3 | 7.4 fw | 5.6 mw* | 6.6 mw* | 6.5 |
| Coating 4 | 12.4 ms | 14.6 mw | 13.0 mw | 13.3 |
| Coating 5 | 9.1 fw | 12.2 mw | 10.2 mw | 10.5 |

*NOTE: Flaking of the coating was noted.

Turning 1045 steel (200 BHN)
259 m/min (850 sfm) / 0.38 mm/rev. (.015 ipr) / 2.03 mm (.080") doc
CNMG-432 style (0.025 to 0.051 mm (.001 - .002 inch) radius hone)
-5° lead angle / no coolant
Tool Life Criteria: same as Table 4

TABLE 6

| Tool Material | Tool Life (min) & Failure Mode | | | Avg. |
|---|---|---|---|---|
| Coating 4 | 19.6 cr | 17.7 cr* | 18.4 cr | 18.6 |

*NOTE: Flaking of the coating was noted.

Turning 1045 steel (200 BHN)
259 m/min (850 sfm) / 0.38 mm/rev. (.015 ipr) / 2.03 mm (.080") doc
SNGN-433 style (0.025 to 0.076 mm (.001 - .003 inch) radius hone)
15° lead angle / no coolant
Tool Life Criteria: same as Table 4

TABLE 7

| Tool Material | Tool Life (min)& Failure Mode | | Avg. |
|---|---|---|---|
| Coating 4 | 5.8 fw | 5.8 fw | 5.8 |

EP 0 463 000 B1

Turning ASTM A536 80-55-06 ductile iron (248 BHN)
183 m/min (600 sfm) / 0.51 mm/rev. (.020 ipr) / 2.54 mm (.100") doc
SNGN-433 style (0.025 to 0.076 mm (.001 - .003 inch) waterfall hone)
15° lead angle / no coolant
Tool Life Criteria: same as Table 4

TABLE 8

| Tool Material | Tool Life (min) & Failure Mode | | Avg. |
|---|---|---|---|
| Coating 3 | 13.2 fw | 14.8 fw | 14.0 |
| Coating 4 | 17.0 fw | 15.7 cr | 16.4 |
| Coating 5 | 14.0 fw | 12.8 fw | 13.4 |

Turning ASTM 536 65-45-12 ductile iron (163 BHN)
259 m/min (850 sfm) / 0.51 mm/rev. (.020 ipr) / 2.54 mm (.100") doc
SNGN-433 style (0.025 to 0.076 mm (.001 - .003 inch) waterfall hone)
15° lead angle / no coolant
Tool Life Criteria: same as Table 4

TABLE 9

| Tool Material | Tool Life (min) & Failure Mode | | | Avg. |
|---|---|---|---|---|
| Coating 4 | 17.5 cr | 3.0 ch | 13.3 cr | 11.3 |

Turning ASTM A536 65-45-12 ductile iron (163 BHN)
259 m/min (850 sfm) / 0.51 mm/rev. (.020 ipr) / 2.54 mm (.100") doc
SNGN-433 style (0.025 to 0.076 mm (.001 - .003 inch) waterfall hone)
15° lead angle / no coolant
Tool Life Criteria: same as Table 4

TABLE 10

| Tool Material | Tool Life (min) & Failure Mode |
|---|---|
| Coating 4 | 20.6 cr |

Turning ASTM A536 65-45-12 ductile iron (163 BHN)
213 m/min (700 sfm) / 0.762 mm/rev. (.030 ipr) / 2.54 mm (.100") doc
SNGN-433 style (0.025 to 0.076 mm (.001 - .003 inch) waterfall hone)
15° lead angle / no coolant
Tool Life Criteria: same as Table 4

TABLE 11

| Tool Material | Tool Life (min) & Failure Mode | | Avg. |
|---|---|---|---|
| Coating 4 | 4.3 fw | 4.6 fw | 4.5 |

Flycut Milling ASTM A536 60-40-18 ductile iron (182 BHN)
213 m/min (700 sfm) / 0.38 mm/rev. (.015 ipt) / 2.54 mm (.100") doc SNGN-433 style (0.025 to 0.076 mm
(.001 - .003 inch) waterfall hone) / no coolant
15° lead angle / 20.3 cm (8 inch) flycutter cutter diameter / 10.2 cm (4 inch) width / 61 cm (24 inch) length
/ straddle type
Tool Life Criteria:

11

EP 0 463 000 B1

fw -- 0.381 mm (.015") uniform flank wear
cr -- 0.102 mm (.004") crater depth
ch -- 0.762 mm (.030") chip
bk -- breakage

TABLE 12

| Tool Material | Tool Life (min) & Failure Mode | | Avg. |
|---|---|---|---|
| Coating 4 | 8.6 cr | 7.8 fw | 8.2 |

Flycut Milling ASTM A536 60-40-18 ductile iron (182 BHN)
213 m/min (700 sfm) / 0.18 mm/rev. (.007 ipt) / 2.54 mm (.100") doc SNGN-433 style (0.025 to 0.076 mm (.001 - .003 inch) waterfall hone) / no coolant
15° lead angle / 20.3 cm (8 inch) flycutter cutter diameter / 10.2 cm (4 inch) width / 61 cm (24 inch) length / straddle type
Tool Life Criteria:
fw -- 0.381 mm (.015") uniform flank wear
cr -- 0.102 mm (.004") crater depth
ch -- 0.762 mm (.030") chip
bk -- breakage

TABLE 13

| Tool Material | Tool Life (min) & Failure Mode | | Avg. |
|---|---|---|---|
| Coating 4 | 4.4 cr | 5.0 ch | 4.7 |

Flycut Milling ASTM A536 60-40-18 ductile iron (182 BHN)
366 m/min (1200 sfm) / 0.18 mm/rev. (.007 ipt) / 2.54 mm (.100") doc SNGN-433 style (0.025 to 0.076 mm (.001 - .003 inch) waterfall hone)
15° lead angle / 20.3 cm (8 inch) flycutter cutter diameter / 10.2 cm (4 inch) width / 61 cm (24 inch) length / straddle type
Tool Life Criteria:
fw -- 0.381 mm (.015") uniform flank wear
cr -- 0.102 mm (.004") crater depth
ch -- 0.762 mm (.030") chip
bk -- breakage

It is submitted that the foregoing test results indicate that the cutting inserts according to the present invention possess an excellent combination of flank wear resistance, crater wear resistance and edge strength in the machining of steels providing long tool lives in both continuous and interrupted machining operations. Good tool lives were exhibited in the machining of ductile cast irons.

**Claims**

1. A cutting insert comprising a body having a rake face and a flank face; and a cutting edge at a junction of said rake face and said flank face; with said body being composed of:

a cemented carbide substrate consisting essentially of tungsten carbide grains, solid solution carbide grains containing tungsten and an element selected from the group consisting of titanium, tantalum, niobium, zirconium and hafnium, alone or together, and 6.1 to 6.5 weight percent cobalt, said substrate having a hardness of 90.8 to 91.6 Rockwell A and a magnetic coercive force of 9,550 to 12,740 A/m (120 to 160 oerstads);

a coating bonded to said substrate;said coating including a backing layer bonded to said substrate, having a thickness of at least 5 micrometers, and selected from the group consisting of the carbonitrides of titanium, hafnium and zirconium, alone or in combination; an active layer composed of alternating sublayers including at least a plurality of alumina sublayers, each having a fine grain size and a nominal thickness of less than 1.5 μm, and separated from each other by an intermediate

12

EP 0 463 000 B1

sublayer selected from the group consisting of the nitrides of titanium, zirconium and hafnium, alone or in combination, and said active layer starting with either an alumina or intermediate sublayer bonded to said backing layer; and

a finish layer bonded to the outermost alumina layer; said finish layer selected from the group consisting of the carbonitrides and nitrides of titanium, alone or in combination.

2. The cutting insert according to claim 1 wherein the hardness of said substrate is 91.0 to 91.6 Rockwell A.

3. The cutting insert according to any one of claims 1 or 2 wherein cobalt forms 6.2 to 6.4 w/o of said substrate.

4. The cutting insert according to any one of claims 1 to 3 wherein said backing layer consists of titanium carbonitride.

5. The cutting insert according to any one of claims 1 to 4 wherein said intermediate sublayers consist of titanium nitride.

6. The cutting insert according to any one of claims 1 to 3 further characterized in that said backing layer includes a layer of titanium carbonitride and said backing layer has a thickness of 5 to 8 $\mu$m;

7. The cutting insert according to any one of claims 1 to 6 wherein said finish layer includes a titanium carbonitride finish layer bonded to one of said alumina layers, and a titanium nitride finish layer bonded to said titanium carbonitride finish layer.

8. The cutting insert according to any one of claims 1 to 7 wherein each of said intermediate sublayers is titanium nitride having a nominal thickness of about 0.2 to 1.0 $\mu$m.

9. The cutting insert according to any one of claims 1 to 8 further characterized in that the total thickness of the alumina sublayers in the active layer is about 2.3 to 4.0 $\mu$m.

10. The cutting insert according to any one of claims 1 to 9 characterized in that said finish layer has a thickness of about 0.2 to 4 $\mu$m of titanium nitride.

11. The cutting insert according to any one of the foregoing claims, characterized in that the carbon content of said backing layer varies, with the carbon content decreasing in a direction away from said substrate.

**Patentansprüche**

1. Schneideinsatz mit einem Körper, der eine Spanfläche und eine Freifläche aufweist, und mit einer Schneidkante am Zusammentreffen der Spanfläche und der Freifläche, wobei der Körper zusammengesetzt ist aus:

einem Hartmetallsubstrat, das im wesentlichen aus Wolframkarbidkörnern, in fester Lösung vorliegenden, Wolfram und ein aus der aus Titan, Tantal, Niob, Zirkonium und Hafnium, allein oder zusammen, bestehenden Gruppe ausgewähltes Element enthaltenden Karbidkörnern und 6,1 bis 6,5 Gew.% Kobalt besteht, wobei das Substrat eine Härte von 90,8 bis 91,6 Rockwell A und eine magnetische Koerzitivkraft von 9.550 bis 12.740 A/m (120 bis 160 Oersted) aufweist, und

einer an das Substrat gebundenen Beschichtung, wobei die Beschichtung eine Grundschicht umfaßt, die an das Substrat gebunden ist, eine Dicke von wenigstens 5 $\mu$m aufweist und aus der aus den Karbonitriden von Titan, Hafnium und Zirkonium, allein oder in Kombination miteinander, bestehenden Gruppe ausgewählt ist, wobei die Beschichtung ferner eine aktive Schicht umfaßt, die aus alternierenden, mindestens eine Mehrzahl von Aluminiumoxidteilschichten einschließenden Teilschichten aufgebaut ist, wobei jede der Aluminiumoxidteilschichten eine feine Korngröße und eine nominale Dicke von weniger als 1,5 $\mu$m hat, und wobei die Aluminiumoxidteilschichten voneinander durch eine aus der aus den Nitriden von Titan, Zirkonium und Hafnium, allein oder in Kombination miteinander, bestehenden Gruppe ausgewählte dazwischenliegende Teilschicht getrennt sind, und wobei die aktive Schicht entweder mit einer Aluminiumoxidteilschicht oder einer dazwischenliegenden Teilschicht be-

13

ginnt, die an die Grundschicht gebunden sind, und wobei die Beschichtung eine an die äußerste Aluminiumoxidschicht gebundene Endschicht umfaßt, die aus der aus den Karbonitriden und Nitriden von Titan, allein oder in Kombination miteinander, bestehenden Gruppe ausgewählt ist.

2. Schneideinsatz nach Anspruch 1, dadurch gekennzeichnet, daß die Härte des Substrats 91,0 bis 91,6 Rockwell A beträgt.

3. Schneideinsatz nach einem der Ansprüche 1 oder 2, dadurch gekennzeichnet, daS das Kobalt 6,2 bis 6,4 Gew.% des Substrats bildet.

4. Schneideinsatz nach einem der Ansprüche 1 bis 3, dadurch gekennzeichnet, daß die Grundschicht aus Titankarbonitrid besteht.

5. Schneideinsatz nach einem der Ansprüche 1 bis 4, dadurch gekennzeichnet, daß die dazwischenliegenden Teilschichten aus Titannitrid bestehen.

6. Schneideinsatz nach einem der Ansprüche 1 bis 3, dadurch gekennzeichnet, daß die Grundschicht eine Titankarbonitridschicht umfaßt und eine Dicke von 5 bis 8 $\mu$m hat.

7. Schneideinsatz nach einem der Ansprüche 1 bis 6, dadurch gekennzeichnet, daß die Endschicht eine an eine der Aluminiumoxidschichten gebundene Titankarbonitridendschicht und eine an die Titankarbonitridendschicht gebundene Titannitridendschicht umfaßt.

8. Schneideinsatz nach einem der Ansprüche 1 bis 7, dadurch gekennzeichnet, daß jede der dazwischenliegenden Teilschichten aus Titannitrid besteht und eine nominale Dicke von etwa 0,2 bis 1,0 $\mu$m aufweist.

9. Schneideinsatz nach einem der Ansprüche 1 bis 8, dadurch gekennzeichnet, daß die Gesamtdicke der Aluminiumoxidteilschichten in der aktiven Schicht etwa 2,3 bis 4,0 $\mu$m beträgt.

10. Schneideinsatz nach einem der Ansprüche 1 bis 9, dadurch gekennzeichnet, daß die Endschicht eine Dicke von etwa 0,2 bis 4 $\mu$m aus Titannitrid aufweist.

11. Schneideinsatz nach einem der vorstehenden Ansprüche, dadurch gekennzeichnet, daß der Kohlenstoffgehalt der Grundschicht variiert und in einer von dem Substrat wegführenden Richtung abnimmt.

**Revendications**

1. Pièce rapportée de coupe comprenant un corps ayant une face de coupe et une face de dépouille ; et une arête de coupe à la jonction de ladite face de coupe et de ladite face de dépouille ; ledit corps étant constitué de :

un substrat en carbure cémenté constitué essentiellement de grains de carbure de tungstène, de grains de carbure en solution solide contenant du tungstène et un élément choisi dans le groupe formé par le titane, le tantale, le niobium, le zirconium et le hafnium, seuls ou en association, et de 6,1 à 6,5 pour cent en poids de cobalt, ledit substrat ayant une dureté Rockwell A de 90,8 à 91,6 et une force coercitive magnétique de 9550 à 12 740 A/m (120 à 160 oersteds) ;

un revêtement lié audit substrat ; ledit revêtement comprenant une couche de base liée au substrat, ayant une épaisseur d'au moins 5 micromètres, et choisie dans le groupe formé par les carbonitrures de titane, de hafnium et de zirconium, seuls ou en association ; une couche active constituée de sous-couches alternées comprenant au moins plusieurs sous-couches d'alumine ayant chacune une fine taille de grains et une épaisseur nominale inférieure à 1,5 $\mu$m et séparées les unes des autres par une sous-couche intermédiaire choisie dans le groupe formé par les nitrures de titane, de zirconium et de hafnium, seuls ou en association, et ladite couche active commençant soit par une sous-couche d'alumine, soit par une sous-couche intermédiaire, liée à ladite couche de base ; et

une couche de finition liée à la couche d'alumine extérieure ; ladite couche de finition étant choisie dans le groupe formé par les carbonitrures et nitrures de titane, seuls ou en association.

2. Pièce rapportée de coupe selon la revendication 1, dans laquelle la dureté Rockwell A dudit substrat est de 91,0 à 91,6.

3. Pièce rapportée de coupe selon l'une quelconque des revendications 1 et 2, dans laquelle le cobalt constitue 6,2 à 6,4 % en poids dudit substrat.

4. Pièce rapportée de coupe selon l'une quelconque des revendications 1 à 3, dans laquelle ladite couche de base consiste en carbonitrure de titane.

5. Pièce rapportée de coupe selon l'une quelconque des revendications 1 à 4, dans laquelle lesdites sous-couches intermédiaires consistent en nitrure de titane.

6. Pièce rapportée de coupe selon l'une quelconque des revendications 1 à 3, caractérisée de plus par le fait que ladite couche de base comprend une couche de carbonitrure de titane et ladite couche de base a une épaisseur de 5 à 8 $\mu$m.

7. Pièce rapportée de coupe selon l'une quelconque des revendications 1 à 6, dans laquelle ladite couche de finition comprend une couche de finition en carbonitrure de titane liée à l'une desdites couches d'alumine, et une couche de finition en nitrure de titane liée à ladite couche de finition en carbonitrure de titane.

8. Pièce rapportée de coupe selon l'une quelconque des revendications 1 à 7, dans laquelle chacune desdites sous-couches intermédiaires est du nitrure de titane ayant une épaisseur nominale d'environ 0,2 à 1,0 $\mu$m.

9. Pièce rapportée de coupe selon l'une quelconque des revendications 1 à 8, caractérisée de plus par le fait que l'épaisseur totale des sous-couches d'alumine dans la couche active est d'environ 2,3 à 4,0 $\mu$m.

10. Pièce rapportée de coupe selon l'une quelconque des revendications 1 à 9, caractérisée par le fait que ladite couche de finition a une épaisseur d'environ 0,2 à 4 $\mu$m de nitrure de titane.

11. Pièce rapportée de coupe selon l'une quelconque des revendications précédentes, caractérisée par le fait que la teneur en carbone de ladite couche de base varie, la teneur en carbone diminuant dans le sens qui s'éloigne dudit substrat.

FIG. 1

FIG. 3

FIG. 2